(19) Europäisches Patentamt
European Patent Office
Office européen des brevets

(11) Publication number : **0 501 822 A1**

# (12) EUROPEAN PATENT APPLICATION

(21) Application number : **92301725.5**

(51) Int. Cl.$^5$ : **C07F 7/08**, A61K 31/695

(22) Date of filing : **28.02.92**

(30) Priority : **28.02.91 GB 9104259**

(43) Date of publication of application :
**02.09.92 Bulletin 92/36**

(84) Designated Contracting States :
**PT**

(71) Applicant : **RHONE-POULENC RORER LIMITED**
**Rainham Road South**
**Dagenham, Essex RM10 7XS (GB)**

(72) Inventor : **Bridge, Andrew William**
**c/o Rhone-Poulenc Rorer Ltd.**
**Dagenham, Essex RM10 7XS (GB)**

(74) Representative : **Bentham, Stephen et al**
**J.A. Kemp & Co. 14 South Square Gray's Inn**
**London, WC1R 5LX (GB)**

(54) **Benzamide derivatives.**

(57) Benzamide derivatives of the formula :

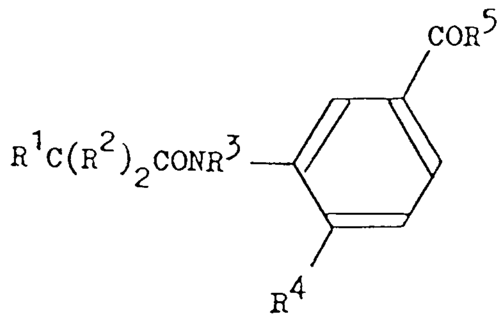

(I)

wherein $R^1$ is optionally substituted alkyl optionally containing double or triple bonds or cycloalkyl rings, which is interrupted by silicon, and optionally interrupted by a hetero atom, and/or by sulphinyl or sulphonyl groups, $R^2$ is hydrogen, alkyl, or optionally substituted phenyl or the two groups $R^2$ form a 3 to 8-membered ring, $R^3$ is hydrogen or alkyl, $R^4$ is alkoxy, alkylthio or dimethylamino, and $R^5$ is a group $-NR^8R^9$ or $-OR^{10}$ wherein $R^8$ and $R^9$ each represents hydrogen or alkyl optionally interrupted by a hetero atom, sulphinyl or sulphonyl group and optionally containing one or more carbon-carbon double or triple bonds, and $R^{10}$ is alkyl optionally interrupted by a hetero atom, sulphinyl or sulphonyl group, and optionally containing double or triple bonds, or a pharmaceutically acceptable salt thereof, possess useful pharmacological properties.

EP 0 501 822 A1

This invention relates to new, therapeutically useful benzamide derivatives, to a process for their production and to pharmaceutical compositions containing them, and methods for their use.

The new benzamide derivatives of the present invention are the compounds of formula I, hereinafter depicted, wherein $R^1$ represents a branched-chain alkyl group containing up to about 20 carbon atoms, optionally containing one or more carbon-carbon double or triple bonds and/or cycloalkyl rings, which is interrupted by one or more silicon atoms, and which is optionally interrupted by one or more other hetero atoms, e.g. oxygen, sulphur or nitrogen atoms, and/or by one or more sulphinyl or sulphonyl groups, and optionally carrying one or more substituents selected from halogen atoms, amino groups, alkoxy, alkylthio, alkylsulphinyl, alkylsulphonyl, alkylamino and dialkylamino groups each containing up to about 3 carbon atoms, and groups of the formula $-CONR^6R^7$ wherein $R^6$ represents a hydrogen atom or an alkyl, e.g. methyl group and $R^7$ represents an alkyl or haloalkyl group, e.g. methyl, trifluoromethyl or trichloromethyl group, the symbols $R^2$ are the same or different and each represents a hydrogen atom, a straight- or branched-chain alkyl group containing up to about 6 carbon atoms or an optionally substituted phenyl group or the two groups $R^2$ together with the carbon atom to which they are attached form a saturated or unsaturated ring containing up to about 8 (generally from about 3 to about 8) carbon atoms and optionally containing one or more hetero atoms selected from oxygen, sulphur and nitrogen atoms, $R^3$ represents a hydrogen atom or a straight- or branched-chain alkyl group containing up to about 6 carbon atoms, $R^4$ represents a straight- or branched-chain alkoxy or alkylthio group containing up to about 6 carbon atoms or a dimethylamino group, and $R^5$ represents a group of the formula $-NR^8R^9$ or $-OR^{10}$ wherein $R^8$ and $R^9$ may be the same or different and each represents a hydrogen atom or a straight- or branched-chain alkyl group containing up to about 10 carbon atoms, optionally interrupted by one or more hetero atoms, e.g. oxygen, sulphur or nitrogen atoms and/or by one or more sulphinyl or sulphonyl groups, and optionally containing one or more carbon-carbon double or triple bonds, and $R^{10}$ represents a straight- or branched-chain alkyl group containing up to about 10 carbon atoms, and optionally interrupted by one or more hetero atoms, e.g. oxygen, sulphur or nitrogen atoms and/or by one or more sulphinyl or sulphonyl groups, and optionally containing one or more carbon-carbon double or triple bonds.

It is to be understood that, where in this specification reference is made to compounds of formula I, it is intended to refer also where the context so permits to their pharmaceutically acceptable salts. Such salts are prepared from the parent compounds of formula I by the application or adaptation of known methods, or are produced by the processes described herein. Parent compounds of formula I can be generated therefrom by the application or adaptation of known methods.

By the term "known methods" is meant methods known heretofore or described in the literature.

Compounds of formula I can be purified by the usual physical means, for example by crystallisation or chromatography.

The person skilled in the art will appreciate that some of the compounds of formula I can exist in more than one enantiomeric form. All such forms, their mixtures, their preparation and their use are within the scope of the present invention.

The enantiomers can be separated from their mixtures by the usual methods, e.g. chromatography, and alternatively they can be prepared from the appropriate enantiomeric forms of their intermediates.

Preferably, when a substituent $R^1$, $R^8$, $R^9$ or $R^{10}$ contains more than one interruption by heteroatoms, including silicon atoms, sulphinyl and sulphonyl groups, then each pair of said interruptions are separated by at least two carbon atoms.

Preferably when a substituent $R^1$, $R^8$, $R^9$ or $R^{10}$ contains one or more carbon-carbon double or triple bonds it is not adjacent to a heteroatom or to a sulphinyl or sulphonyl group.

An important class of compounds of formula I comprises those wherein at least one of the symbols has a value selected from the following:-

(i) $R^1$ represents a branched-chain alkyl group containing from 10 to 20 carbon atoms, interrupted by a silicon atom and optionally by 1 or 2 oxygen or sulphur atoms, preferably an alkyl(dialkylsilyl)alkyl, alkoxyalkyl(dialkylsilyl)alkyl, or alkoxyalkoxyalkyl(dialkylsilyl)alkyl group, wherein the various alkyl moieties are the same or different;

(ii) $R^2$ represents an alkyl group or, preferably, a hydrogen atom;

(iii) $R^3$ represents a hydrogen atom;

(iv) $R^4$ represents an alkoxy or, preferably, alkylthio group, preferably containing 1 or 2 carbon atoms;

(v) $R^8$ represents an alkyl group of up to 3 carbon atoms or, preferably, a hydrogen atom;

(vi) $R^9$ represents an alkyl , alkoxyalkyl or alkylthioalkyl group of up to 6, preferably up to 4, carbon atoms, preferably a butyl or methylthiopropyl group;

the other symbols being as hereinbefore defined, and pharmaceutically acceptable salts thereof.

Especially important compounds according to the invention include:-

A N-butyl-4-ethylthio-3-(4,4-dimethyl-4-silatetradecanamido)benzamide;

B N-butyl-3-(4,4-dimethyl-4-silatetradecanamido)-4-(methylthio)benzamide; and

C 4-ethylthio-N-(3-methylthiopropyl)-3-(4,4-dimethyl-8,12-dioxa-4-silatetradecanamido)benzamide.

The letters A to C are allocated to the compounds for easy reference later in this specification.

The compounds according to the invention are inhibitors of acyl coenzyme-A:cholesterol-O-acyl transferase (ACAT; EC 2.3.1.26). They are therefore of value as anti-atherosclerotic agents and have utility in the treatment of atherosclerosis, hyperlipidaemia, cholesterol ester storage disease and atheroma in vein grafts, and in the reduction of the atherosclerotic plaque.

Compounds within the scope of the present invention exhibit positive pharmacological activities as demonstrated by the following tests which are believed to correlate to pharmacological activity in humans and other animals.

In assays performed in-vitro, microsomes, obtained from the livers of rats fed on a diet supplemented with 0.5%w/w cholesterol and 0.25%w/w cholic acid for 7 days, were incubated with radiolabelled oleoyl-CoA in the presence of compounds according to the invention at a concentration of 0.5 or 1 μg/ml. The degree of ACAT inhibition produced was up to 98% or more.

In in-vivo tests, using rats fed on a similar diet to that above and further supplemented by 0.03% w/w of test compound, the compounds according to the invention inhibited increases in plasma cholesterol concentrations, measured after 3 days, relative to control animals fed on the cholesterol supplemented diet without the drug, by up to 75% or more.

The present invention also provides a method for the treatment of a human or animal patient suffering from, or subject to, conditions which can be ameliorated by the administration of an inhibitor of acyl coenzyme-A:cholesterol-O-acyl transferase, such as atherosclerosis, hyperlipidaemia, cholesterol ester storage disease and atheroma in vein grafts, (for example by reduction of the atherosclerotic plaque), which comprises administering to the patient an effective amount of a compound of formula I, or a pharmaceutically acceptable salt thereof, as hereinbefore defined, to secure an improvement in the condition of the patient.

Compounds of formula I can be prepared by the application or adaptation of known methods, by which is meant methods used heretofore or described in the literature.

According to a feature of the present invention, compounds of general formula I are prepared by the reaction of a compound of general formula II hereinafter depicted, wherein $R^3$, $R^4$ and $R^5$ are as hereinbefore defined, with a compound of the general formula:

$$R^1\text{-}C(R^2)_2COZ^1 \qquad (III)$$

wherein $R^1$ and $R^2$ are as hereinbefore defined and $Z^1$ represents a halogen, e.g. chlorine, atom or an alkoxycarbonyloxy group, for example methoxycarbonyloxy or ethoxycarbonyloxy, or with the corresponding anhydride of the general formula:

$$[R^1\text{-}C(R^2)_2CO]_2O \qquad (IV)$$

wherein $R^1$ and $R^2$ are as hereinbefore defined.

When $Z^1$ represents a halogen atom the reaction may be performed in the presence of a suitable base, such as a tertiary amine.

In each instance the reaction may be carried out in a suitable solvent, e.g. dichloromethane, optionally with heating.

According to a further feature of the invention, compounds of formula I are prepared by reacting a compound of general formula:

$$R^{10}OH \qquad (V)$$

wherein $R^{10}$ is as hereinbefore defined, or a compound of general formula:

$$HNR^8R^9 \qquad (VI)$$

wherein $R^8$ and $R^9$ are as hereinbefore defined, with a compound of formula VII, hereinafter depicted, wherein $R^1$, $R^2$, $R^3$ and $R^4$ are as hereinbefore defined and $Z^2$ represents a hydroxy group, a halogen, e.g. chlorine, atom or an alkoxycarbonyloxy group, for example methoxycarbonyloxy or ethoxycarbonyloxy, or with the corresponding anhydride of formula VIII, hereinafter depicted, wherein $R^1$, $R^2$, $R^3$ and $R^4$ are as hereinbefore defined.

The reaction conditions are similar to those described above for the reaction between the compounds of general formulae II and III.

When $Z^2$ represents a hydroxy group the reaction is preferably performed in the presence of a condensing agent, such as dicyclohexylcarbodiimide, or a catalytic quantity of an inorganic acid, e.g. hydrochloric acid, optionally generated in situ.

According to a further feature of the invention, compounds of general formula I are prepared by the interconversion of other compounds of formula I.

For example, compounds of formula I wherein $R^3$ and/or $R^8$ and/or $R^9$ is other than a hydrogen atom may be prepared from compounds of formula I wherein $R^3$ and/or $R^8$ and/or $R^9$ represents a hydrogen atom by the

application or adaptation of known methods of alkylation.

As a further example, compounds of formula I containing a sulphonyl group are prepared by the oxidation of compounds of formula I containing a sulphinyl or thio group and compounds of formula I containing a sulphinyl group are prepared by the oxidation of compounds of formula I containing a thio group using a conventional oxidant, such as a percarboxylic acid (e.g. m-chloroperbenzoic acid), in an inert solvent, such as dichloromethane, at or below room temperature.

The intermediate compounds of formulae VII and VIII, wherein the various symbols are as hereinbefore defined, and salts thereof, are novel and as such constitute a feature of the present invention.

Compounds of formulae II, III, IV, V, VI, VII and VIII may be prepared by the application or adaptation of known methods, for example methods illustrated in the following Examples and Reference Example.

For example, (i) acid halides of formulae III and VII wherein $Z^1$ or $Z^2$, respectively, represents a halogen atom may be prepared from the corresponding carboxylic acids by known methods, e.g., when $Z^1$ or $Z^2$ represents a chlorine atom, by reaction with thionyl chloride, or they may be prepared in situ by the action of agents such as bis(2-oxo-3-oxazolidinyl)phosphinic chloride;

(ii) the said corresponding carboxylic acids may be prepared from corresponding esters by hydrolysis of the ester grouping by known methods, for example by reaction with alkali, e.g. aqueous sodium hydroxide solution, followed by neutralisation by treatment with mineral acid, e.g. dilute hydrochloric acid.

The following Examples and Reference Example illustrate the preparation of the compounds according to the invention and their intermediates.

In the presentation of the nuclear magnetic resonance ("NMR") spectrum, which was carried out at 400MHz in deuterochloroform, chemical shifts were expressed in parts per million relative to tetramethylsilane. Abbreviations have the following significances:- s = singlet, d = doublet, t = triplet, q = quartet, m = multiplet, dd = doublet of doublets, and b = broad.

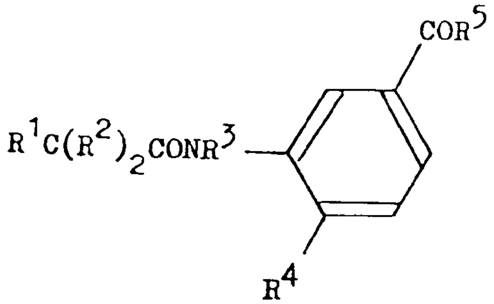

I

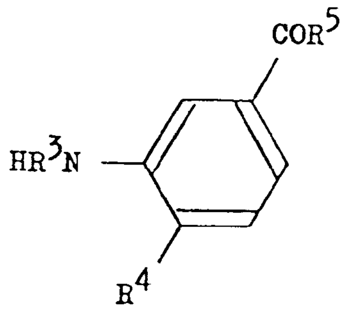

II

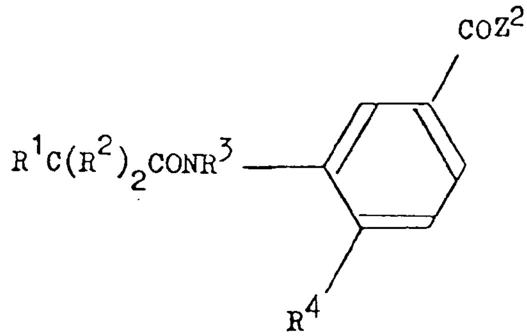

VII

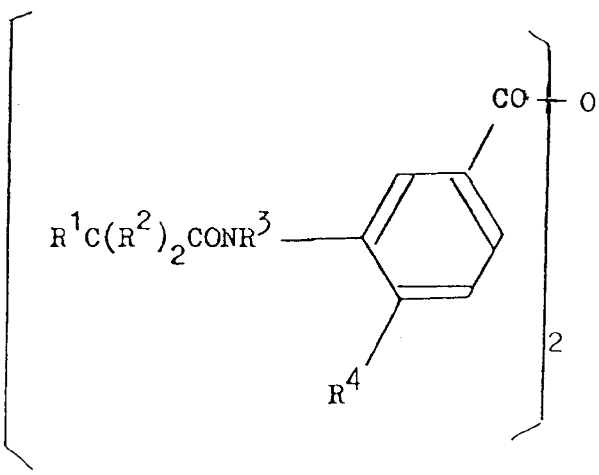

VIII

EXAMPLE 1

Compound A

A solution of 4,4-dimethyl-4-silatetradecanoyl chloride (2.9g; prepared from 4,4-dimethyl-4-silatetradecanoic acid and thionyl chloride) in dry dichloromethane (20ml) was added to a solution of N-butyl-3-amino-4-(ethylthio)benzamide (2.5g) and triethylamine (1.2g) in dry dichloromethane (30ml). The mixture was stirred at the ambient temperature for 2 hours and was then concentrated under reduced pressure. The residue was partitioned between diethyl ether and dilute hydrochloric acid (1N). The organic solution was washed with water and then with saturated aqueous sodium hydrogen carbonate and was dried over magnesium sulphate. Concentration under reduced pressure gave a soft solid, which was subjected to chromatography on silica gel, eluting with a mixture of methanol and dichloromethane, to give N-butyl-4-ethylthio-3-(4,4-dimethyl-4-silatetradecanamido)benzamide (2.3g), m.p. 43-46°C.

EXAMPLE 2

Compound B

A stirred solution of 4,4-dimethyl-4-silatetradecanoic acid (4.00g), triethylamine (3.71g) and 3-amino-N-butyl-4-(methylthio)benzamide (3.50g) in dry dichloromethane (100ml)was treated with bis(2-oxo-3-oxazolidinyl)phosphinic chloride (3.74g). After 3 hours, the mixture was treated with a further quantity of bis(2-oxo-3-oxazolidinyl)phosphinic chloride (3.74g), and stirred for a further 4 hours. The mixture was left to stand for 2 days, and then it was diluted with dichloromethane (100ml), and washed with water (100ml), saturated aqueous sodium bicarbonate solution (200ml), water (200ml), hydrochloric acid (200ml; 1N) and water (100ml), and then dried. Concentrating under reduced pressure gave a solid, which was recrystallised from ethanol. The filtrate was concentrated under reduced pressure, to give an oil, which was chromatographed on silica gel, eluting with a mixture of methanol and dichloromethane, to give a solid, which was recrystallised from petroleum ether (b.p. 40-60°C), to give N-butyl-3-(4,4-dimethyl-4-silatetradecanamido)-4-(methylthio)-benzamide (1.56g) in the form of a white solid, m.p. 86-89°C.

EXEMPLE 3

Compound C

A solution of 3-amino-4-ethylthio-N-(3-methylthiopropyl)benzamide (1.65g) and triethylamine (6ml) in dichloromethane (30ml) was treated with a solution of 4,4-dimethyl-8,12-dioxa-4-silatetradecanoyl chloride [prepared from 4,4-dimethyl-8,12-dioxa-4-silatetradecanoic acid (1.50g) and thionyl chloride] in dry dichloromethane (20ml). After standing for 18 hours, the mixture was concentrated under reduced pressure. The residue was dissolved in diethyl ether and washed with hydrochloric acid (100ml; 1N), water (2x100ml) and saturated aqueous sodium bicarbonate solution (150ml) and then it was dried. The ethereal solution was concentrated under reduced pressure and the resulting oil was chromatographed on silica gel, eluting with a mixture of dichloromethane and methanol, to give 4-ethylthio-N-(3-methylthiopropyl)-3-(4,4-dimethyl-8,12-dioxa-4-silatetradecanamido)benzamide (1.7g), in the form of a pale brown oil. (NMR:- 0.06(6H,s), 0.58(2H,m), 0.93(3H,t, J=7.5Hz), 0.97(2H,m), 1.25(3H,t,J=7.5Hz), 1.35(2H,m), 1.56(4H,m), 1.85(2H,m), 1.92(2H,m), 2.12 (3H,s), 2.41(2H,m), 2.84(2H,q,J=7.5Hz), 3.39(4H,m), 3.49(4H,m), 3.54(2H,q,J=6Hz), 6.58(1H,bt), 7.53(1H,d, J=8Hz), 7.62(1H,dd,J=2 & 6Hz), 8.49(1H,bs), 8.68(1H,bs)].

REFERENCE EXAMPLE 1

A stirred suspension of ground magnesium turnings (12.0g) in dry tetrahydrofuran (150ml), maintained at 35-40°C under an atmosphere of argon was treated with a solution of 2-(2-bromoethyl)-1,3-dioxolane (81.6g) in dry tetrahydrofuran (120ml) during 1 hour. The mixture was then diluted with dry tetrahydrofuran (240ml) and stirred at 40-45°C for 45 minutes, and then it was added during 1 hour to a stirred solution of (chloromethyl)dimethylchlorosilane (70.8g) in dry tetrahydrofuran (1200 ml), maintaining the temperature between 0°C and 5°C. When the addition was complete, the mixture was warmed to ambient temperature, left to stand for 15 hours, and was then warmed at 35-40°C for 2 hours. It was then treated with a solution of ammonium chloride (13.2g) in water (600ml), with ice-cooling. The organic layer was washed with saturated aqueous sodium chloride solution (600ml), dried and concentrated under reduced pressure, to leave an oil, which was distilled in vacuo, retaining the fraction collected between 80°C and 110°C/16mmHg (57.8g).

This product was dissolved in butan-2-one (250ml). The solution was treated with hydrochloric acid (100ml; 1N) and then it was heated at reflux for 18 hours. After cooling, the solution was made basic by the careful addition of potassium carbonate. It was concentrated under reduced pressure to remove organic solvents, and the residue was extracted with diethyl ether (500ml). The ethereal extract was washed with water (3x500ml), dried and concentrated under reduced pressure to give an oil, which was distilled in vacuo, retaining the fraction boiling between 85°C and 91°C/15mmHg, (29.38g).

The majority of this product (28.38g) was dissolved in tetrahydrofuran (100ml), stirred at ambient temperature and treated slowly with a solution of sodium borohydride (6.53g) in water (40ml). The solution was stirred at the ambient temperaturefor 4 hours and then it was treated with acetone (50ml). After stirring for a further 5 minutes, the mixture was acidified to pH1 and the product was extracted with diethyl ether. The ethereal extract was washed with saturated aqueous sodium chloride solution (250ml), dried and concentrated under reduced pressure, to leave an oil (25.8g).

A stirred mixture of this oil (25.5g) and excess anhydrous potassium carbonate in dry dichloromethane (100ml) was treated with 4-nitrobenzoyl chloride (32.15g) After 5 hours, the mixture was filtered and the solid residue was washed with dichloromethane, and the combined filtrates were concentrated under reduced pressure. The residue was treated with diethyl ether and left to stand overnight. The resulting solid was filtered off. The filtrate was concentrated under reduced pressure and the residue was chromatographed on silica gel, eluting with dichloromethane. The resulting partially purified product was then chromatographed on silica gel, eluting with a mixture of petroleum ether (b.p. 40-60°C) and diethyl ether, to give 3-((chloromethyl)dimethylsilyl]-propyl p-nitrobenzoate (5.70g), in the form of a white solid, m.p. 32-34°C. [Elemental analysis:- C,49.2; H,5.97;N,4.13;C1,11.8%; calculated:- C,49.44;H,5.74; N,4.43;C1,11.23%].

3-[(Chloromethyl)dimethylsilyl]propyl p-nitrobenzoate (6.43g), sodium hydroxide (0.85g), water (10ml) and ethanol (100ml) were stirred together at ambient temperature for 2 hours. The solution was then diluted with water and extracted with diethyl ether (2x250ml). The ethereal extract was dried and concentrated under reduced pressure, to give an oil, which was subjected to bulb-to-bulb distillation at 150-155°C/15mmHg to give 3-[(chloromethyl)dimethylsilyl]propanol, in the form of a colourless oil. [Elemental analysis:- C,43.3;H, 9.1;C1,21.2%; calculated:- C,43.23;H,9.07;C1,21.26%].

A stirred solution of trifluoromethanesulphonic anhydride (50g) in dry dichloromethane (200ml) was treated with a solution of 3-butoxypropanol (12.27g) and dry pyridine (7.35g) in dry dichloromethane (20ml) during 30

minutes, keeping the mixture between -5°C and +5°C. After stirring at 0°C for a further 90 minutes, the mixture was diluted with dichloromethane (200ml), washed with melted ice (500ml), dried over magnesium sulphate and filtered. The filtrate was treated with anhydrous potassium carbonate (33g) and 3-[(chloromethyl)dimethylsilyl]propanol (2.05g) and the resulting suspension was stirred at the ambient temperature, under an atmosphere of argon, for 40 hours. The suspension was treated with anhydrous methanol (50ml) and stirred for a further 2 days. The mixture was filtered and the residue was washed with dichloromethane. The combined filtrates were washed with water (2x250ml), dried and concentrated under reduced pressure, to give an oil. This oil was concentrated further at 80°C/15mmHg, to give a mixture of (chloromethyl)dimethyl-4,8-dioxadodecylsilane and (3-methoxypropoxy)butane (5.09g).

A solution of lithium diisopropylamide mono(tetrahydrofuran) in cyclohexane (60ml; 1.5M) was added during 30 minutes to a stirred solution of 2,4,4-trimethyl-2-oxazoline (10.25g) and sodium iodide (1.0g) in dry tetrahydrofuran (100ml) under nitrogen at -78°C. The solution was stirred at -78°C for 30 minutes, then it was treated with the abovementioned mixture of (chloromethyl)dimethyl-4,8-dioxadodecylsilane and (3-methoxypropoxy)butane (5.09g) in tetrahydrofuran (20ml). The mixture was brought to ambient temperature, stirred for 2 hours, and was then left to stand for 15 hours. It was then treated with hydrochloric acid (100ml; 1N) and the mixture was concentrated under reduced pressure to remove organic solvents. The residue was diluted with water (100ml), treated with hydrochloric acid (25ml), and stirred at reflux for 6 hours. After cooling, the mixture was extracted with diethyl ether and the ethereal solution was concentrated under reduced pressure. The residue was treated with aqueous sodium hydroxide and washed with petroleum ether (b.p. 40-60°C) (2x150ml). The aqueous layer was acidified to pH1 and extracted with diethyl ether (3x200ml). The ethereal extract was dried and concentrated under reduced pressure, to give an oil. Bulb-to-bulb distillation at 150-170°C/0.1mmHg gave 4,4-dimethyl-8,12-dioxa-4-silatetradecanoic acid (1.54g), in the form of a pale yellow oil.

The present invention also includes within its scope pharmaceutical formulations which comprise at least one of the compounds of formula I in association with a pharmaceutically acceptable carrier or coating. In clinical practice the compounds of the present invention may be administered parenterally, rectally or orally.

Solid compositions for oral administration include compressed tablets, pills, powders and granules. In such solid compositions, one or more of the active compounds is, or are, admixed with at least one inert diluent such as starch, sucrose or lactose. The compositions may also comprise, as is normal practice, additional substances other than inert diluents, e.g. lubricating agents, such as magnesium stearate.

Liquid compositions for oral administration include pharmaceutically acceptable emulsions, solutions, suspensions, syrups and elixirs containing inert diluents commonly used in the art such as water and liquid paraffin. Besides inert diluents such compositions may comprise adjuvants, such as wetting and suspending agents, and sweetening, flavouring, perfuming and preserving agents. The compositions according to the invention for oral administration also include capsules of absorbable material such as gelatin, containing one or more of the active substances with or without the addition of diluents or excipients.

Preparations according to the invention for parenteral administration include sterile aqueous, aqueous-organic, and organic solutions, suspensions and emulsions. Examples of organic solvents or suspending media are propylene glycol, polyethylene glycol, vegetable oils such as olive oil and injectable organic esters such as ethyl oleate. The compositions may also contain adjuvants such as stabilising, preserving, wetting, emulsifying and dispersing agents. They may be sterilised, for example, by filtration through a bacteria-retaining filter, by incorporation in the compositions of sterilising agents, by irradiation or by heating. They may also be manufactured in the form of sterile solid compositions, which can be dissolved in sterile water or some other sterile injectable medium immediately before use.

Solid compositions for rectal administration include suppositories formulated in accordance with known methods and containing at least one compound of formula I.

The percentage of active ingredient in the compositions of the invention may be varied, it being necessary that it should constitute a proportion such that a suitable dosage shall be obtained. Obviously, several unit dosage forms may be administered at about the same time. The dose employed will be determined by the physician, and depends upon the desired therapeutic effect, the route of administration and the duration of the treatment, and the condition of the patient. In the adult, the doses are generally from about 0.5 to about 70, preferably about 1 to about 10, mg/kg body weight per day by oral administration.

The following Example illustrates pharmaceutical compositions according to the present invention.

COMPOSITION EXAMPLE 1

No. 2 size gelatin capsules each containing:-

| | |
|---|---|
| N-butyl-4-ethylthio-3-(4,4-dimethyl-4-silatetradecanamido)benzamide | 20 mg |
| lactose | 100 mg |
| starch | 60 mg |
| dextrin | 40 mg |
| magnesium stearate | 1 mg |

were prepared in accordance with the usual procedure.

## Claims

1. A benzamide derivative of the general formula :

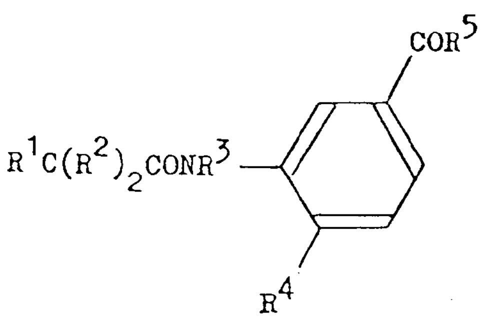

(I)

wherein $R^1$ represents a branched-chain alkyl group containing up to 20 carbon atoms, optionally containing one or more carbon-carbon double or triple bonds and/or cycloalkyl rings, which is interrupted by one or more silicon atoms, and which is optionally interrupted by one or more other hetero atoms, and/or by one or more sulphinyl or sulphonyl groups, and optionally carrying one or more substituents selected from halogen atoms, amino groups, alkoxy, alkylthio, alkylsulphinyl, alkylsulphonyl, alkylamino and dialkylamino groups each containing up to 3 carbon atoms, and groups of the formula $-CONR^6R^7$ wherein $R^6$ represents a hydrogen atom or an alkyl group and $R^7$ represents an alkyl or haloalkyl group, the symbols $R^2$ are the same or different and each represents a hydrogen atom, a straight- or branched-chain alkyl group containing up to 6 carbon atoms or an optionally substituted phenyl group or the two groups $R^2$ together with the carbon atom to which they are attached form a saturated or unsaturated ring containing up to 8 carbon atoms and optionally containing one or more hetero atoms selected from oxygen, sulphur and nitrogen atoms, $R^3$ represents a hydrogen atom or a straight- or branched-chain alkyl group containing up to 6 carbon atoms, $R^4$ represents a straight- or branched-chain alkoxy or alkylthio group containing up to 6 carbon atoms or a dimethylamino group, and $R^5$ represents a group of the formula $-NR^8R^9$ or $-OR^{10}$ wherein $R^8$ and $R^9$ may be the same or different and each represents a hydrogen atom or a straight- or branched-chain alkyl group containing up to 10 carbon atoms, optionally interrupted by one or more hetero atoms, and/or by one or more sulphinyl or sulphonyl groups, and optionally containing one or more carbon-carbon double or triple bonds, and $R^{10}$ represents a straight- or branched-chain alkyl group containing up to 10 carbon atoms, and optionally interrupted by one or more hetero atoms, and/or by one or more sulphinyl or sulphonyl groups, and optionally containing one or more carbon-carbon double or triple bonds, or a pharmaceutically acceptable salt thereof.

2. A compound according to claim 1 wherein the hetero atoms are oxygen, sulphur or nitrogen atoms; $R^6$ represents a hydrogen atom or a methyl group, and $R^7$ represents a methyl, trifluoromethyl or trichloromethyl group.

3. A compound according to claim 1 or 2 wherein, when a substituent $R^1$, $R^8$, $R^9$ or $R^{10}$ contains more than

one interruption by hetero atoms, including silicon atoms, sulphinyl and sulphonyl groups, then each pair of interruptions are separated by at least two carbon atoms.

4. A compound according to any one of the preceding claims wherein, when a substituent $R^1$, $R^8$, $R^9$ or $R^{10}$ contains one or more carbon-carbon double or triple bonds it is not adjacent to a hetero atom or to a sulphinyl or sulphonyl group.

5. A compound according to any one of the preceding claims wherein at least one of the symbols has a value selected from the following:
   (i) $R^1$ represents a branched-chain alkyl group containing from 10 to 20 carbon atoms, interrupted by a silicon atom and optionally by 1 or 2 oxygen or sulphur atoms;
   (ii) $R^2$ represents an alkyl group or a hydrogen atom;
   (iii) $R^3$ represents a hydrogen atom;
   (iv) $R^4$ represents an alkoxy or alkylthio group;
   (v) $R^8$ represents an alkyl group of up to 3 carbon atoms or a hydrogen atom; and/or
   (vi) $R^9$ represents an alkyl, alkoxyalkyl or alkylthioalkyl group of up to 6 carbon atoms;
   the other symbols being as hereinbefore defined.

6. A compound according to claim 5 wherein $R^1$ represents an alkyl(dialkylsilyl)alkyl, alkoxyalkyl(dialkylsilyl)alkyl or alkoxyalkoxyalkyl(dialkylsilyl)alkyl group, wherein the various alkyl moieties are the same or different; $R^2$ represents a hydrogen atom; $R^4$ represents an alkylthio group containing one or two carbon atoms; $R^8$ represents a hydrogen atom; and/or $R^9$ represents a butyl or methylthiopropyl group.

7. A compound according to claim 1 which is:
   N-butyl-4-ethylthio-3-(4,4-dimethyl-4-silatetradecanamido)benzamide;
   N-butyl-3-(4,4-dimethyl-4-silatetradecanamido)-4-(methylthio)benzamide; and
   4-ethylthio-N-(3-methylthiopropyl)-3-(4,4-dimethyl-8,12-dioxa-4-silatetradecanamido)benzamide.

8. A process for the preparation of a compound according to claim 1 which process comprises the reaction of a compound of the general formula :

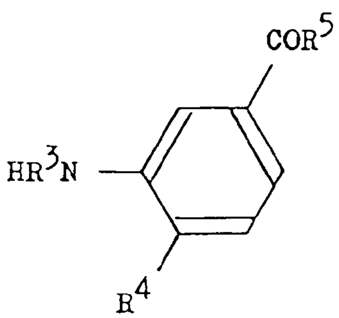

(II)

wherein $R^3$, $R^4$ and $R^5$ are as hereinbefore defined, with a compound of the general formula :

$$R^1\text{-}C(R^2)_2COZ^1 \quad \text{(III)}$$

wherein $R^1$ and $R^2$ as hereinbefore defined and $Z^1$ represents a halogen atom or an alkoxycarbonyloxy group, or with the corresponding anhydride of the general formula :

$$[R^1\text{-}C(R^2)_2CO]_2O \quad \text{(IV)}$$

wherein $R^1$ and $R^2$ are as hereinbefore defined, optionally followed by the conversion of a benzamide derivative of general formula (I) thus obtained into a pharmaceutically acceptable salt thereof.

9. A pharmaceutical composition which comprises a benzamide derivative according to claim 1 or a pharmaceutically acceptable salt thereof in association with a pharmaceutically acceptable carrier or coating.

10. A pharmaceutical composition useful in the treatment of a condition which can be ameliorated by an inhibitor of acyl coenzyme-A:cholesterol-O-acyl transferase which comprises an effective amount of a benzamide derivative according to claim 1 or a pharmaceutically acceptable salt thereof in association with a pharmaceutically acceptable carrier or coating.

**11.** A method of treating a human or animal patient suffering from, or subject to, a condition which can be ameliorated by the administration of an inhibitor of acyl coenzyme-A:cholesterol-O-acyl transferase which comprises administering to the patient an effective amount of a benzamide derivative according to claim 1, or a pharmaceutically acceptable salt thereof, to secure an improvement in the condition of the patient.

**12.** A compound of the formula:

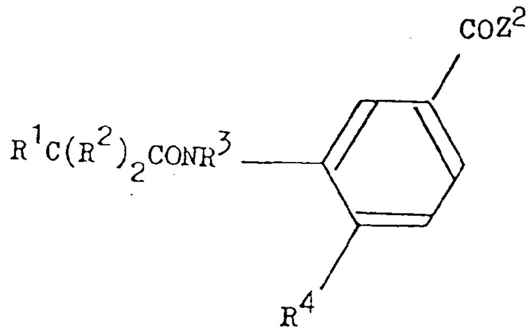

(VII)

or

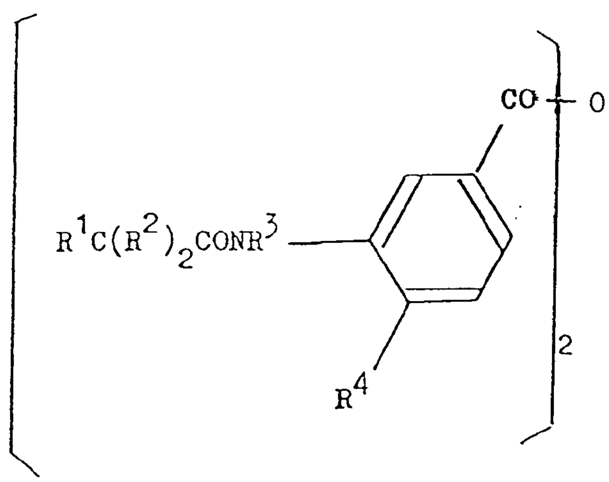

(VIII)

wherein the various symbols are as defined in claim 1, or a salt thereof.

European Patent Office

# PARTIAL EUROPEAN SEARCH REPORT

which under Rule 45 of the European Patent Convention shall be considered, for the purposes of subsequent proceedings, as the European search report

Application Number: EP 92 30 1725

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 670 421 (DE VRIES, V.G. et al.)<br>* Whole document *<br>--- | 1-12 | C 07 F 7/08<br>A 61 K 31/695 |
| A | EP-A-0 025 569 (SANDOZ AG)<br>* Whole document *<br>----- | 1-12 | |

TECHNICAL FIELDS SEARCHED (Int. Cl.5)

C 07 F
A 61 K

## INCOMPLETE SEARCH

The Search Division considers that the present European patent application does not comply with the provisions of the European Patent Convention to such an extent that it is not possible to carry out a meaningful search into the state of the art on the basis of some of the claims

Claims searched completely :

Claims searched incompletely :

Claims not searched :

Reason for the limitation of the search:

Remark: Although claim 11 is directed to a method of treatment of the human/animal body (Article 52(4) EPC) the search has been carried out and based on the alleged effects of the compound/composition.

| Place of search | Date of completion of the search | Examiner |
|---|---|---|
| THE HAGUE | 15-05-1992 | RINKEL L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0407)